# FASCICULE DE BREVET EUROPEEN

(11) **EP 3 749 729 B1**
(45) Date de publication et mention de la délivrance du brevet: **29.11.2023**
(21) Numéro de dépôt: 19702644.6
(22) Date de dépôt: 08.02.2019
(51) Int. Cl.: C09J 7/40

(54) **FILM DE PROTECTION A BASE DE SILICIUM POUR ADHESIF, SON PROCEDE DE FABRICATION ET SES UTILISATIONS**
SCHUTZFILM AUF SILICIUMBASIS FÜR KLEBSTOFF, VERFAHREN ZUR HERSTELLUNG DAVON UND VERWENDUNGEN DAVON
PROTECTIVE FILM BASED ON SILICON FOR ADHESIVE, METHOD FOR THE PRODUCTION THEREOF, AND USES OF SAME

(30) Priorité: 09.02.2018 FR 1851116
(43) Date de publication de la demande: 16.12.2020
(73) Titulaire: Coating Plasma Innovation, 13710 Fuveau (FR)
(72) Inventeur: GAT, Eric Lucien Marie, 13710 FUVEAU (FR); VANDENCASTEELE, Nicolas, 13710 FUVEAU (FR)
(74) Mandataire: Calysta NV
(86) Numéro de dépôt international: PCT/EP2019/053111
(87) Numéro de publication internationale: WO 2019/154976

(56) Documents cités:
- WO-A1-2013/032771
- US-A1- 2015 147 510
- US-A1- 2015 368 418

## Description

### Domaine technique

La présente invention se rapporte à un film de protection à base de silicium, en particulier à base de silicone, plus particulièrement à base de polysiloxane pour adhésif ou auto-adhésif comprenant éventuellement un substrat en papier ou matière plastique muni d'au moins une couche de revêtement anti-adhérent ainsi qu'à un ensemble comprenant un élément adhésif ou auto-adhésif et au moins un film de protection tel qu'indiqué ci-avant.

Les adhésifs peuvent être de différentes natures. Dans les applications électroniques, les adhésifs sont typiquement à base d'acrylate, sans toutefois y être limités et sont de préférence de grade électronique. Dans d'autres cas, des films extérieurs, comme ceux apposés sur les écrans tactiles avant utilisation sont muni de caractéristiques adhésives ou auto-adhésives, par des adhésifs siliconés. Dans d'autres applications, comme dans les dispositifs médicaux, l'adhésif ou l'auto-adhésif est plutôt à base de silicone et est particulièrement, sans toutefois y être limité, un adhésif ou auto-adhésif de grade médical.

La présente invention se rapporte en outre à son utilisation et à son procédé de fabrication.

### Arrière plan technologique de l'invention

Dans un premier aspect, la présente invention concerne donc un film de protection à base de silicium pour élément adhésif ou auto-adhésif.

Les éléments adhésifs ou auto-adhésifs peuvent prendre différentes formes. On distinguera les éléments adhésifs ou autoadhésifs comprenant une première face adhésive ou autoadhésive et une deuxième face non adhésive des éléments adhésifs comportant une première et une deuxième face munie de propriétés adhésives ou auto-adhésives.

Ces adhésifs sont de préférence des adhésifs ou auto-adhésifs sensible à la pression, et de différente nature selon leurs applications. Dans l'électronique, les adhésifs seront de nature acrylique/acrylate, tandis que le domaine médical préfère généralement les adhésifs ou auto-adhésifs silicone. Ils possèdent d'excellentes propriétés de résistance au chaud et au froid, d'isolation électrique et sont particulièrement surs. Les rubans adhésifs sensibles à la pression à base de silicone sont aisément éliminables et présentent néanmoins de bonnes caractéristiques d'adhésion sur une large gamme de surfaces. On les retrouve par exemple dans les adhésifs de masquage, les adhésifs de spécialité, les films protecteurs, les rubans adhésifs double face et les étiquettes.

Les dispositifs médicaux adhésifs ou auto-adhésifs à base de silicone à usage médical peuvent prendre différentes formes comme les électrodes adhésives, agencées pour être disposée sur la peau, les patchs et adhésifs intradermiques, les pansements, adhésifs ou auto-adhésifs.

Pour les éléments adhésifs ou autoadhésif comprenant une première face munie de propriété adhésive ou autoadhésive et une deuxième face « non-adhésive », l'enduit adhésif ou auto-adhésif peut être appliqué sur différents types de supports tels que du papier pour former des étiquettes, des supports en matière plastique ou polymère, des supports tissés ou non tissés, des dispositifs médicaux tels que par exemple des pansements médicaux.

Lorsque les éléments adhésifs ou auto-adhésifs sont commercialisés de manière sensiblement plane, ils sont généralement appliqués sur un substrat « non-adhérent », c'est-à-dire sur un substrat à base de papier ou de matière plastique ou polymère sur laquelle un revêtement non adhérent est appliqué. Ces substrats muni d'un revêtement non adhérents forment des films de protection sous forme de couches pelables (appelé en anglais release liners) apposées sur de nombreux élément adhésifs ou auto-adhésifs à base de silicone, comme sur de nombreux dispositifs médicaux adhésifs ou auto-adhésifs à base de silicone à usage médical.

Il existe donc un grand nombre d'application pour des films de protection à base de silicium pour adhésif ou auto-adhésif à base de silicone, comme par exemple à usage médical.

Lorsque ces éléments adhésifs ou auto-adhésifs sont commercialisés de manière enroulée comme les rouleaux d'adhésifs, certains pansements médicaux, des rouleaux de films protecteurs, ils peuvent être appliqués sur un substrat « non-adhérent », mais ne le sont pas toujours. Parfois, la face adhésive ou auto-adhésive est positionnée sur la deuxième face non-adhésive de l'élément adhésif. Dans ce cas, le revêtement non-adhérent formant le film de protection peut-être directement appliqué sur la deuxième face « non-adhésive » de l'élément adhésif ou auto-adhésif, avant ou après qu'il ait été enduit d'adhésif ou d'auto-adhésif.

Pour les éléments adhésifs ou autoadhésif comprenant une première face munie de propriété adhésive ou autoadhésive et une deuxième face munie de propriété adhésive ou auto-adhésive (éléments adhésif ou auto-adhésif double face), l'enduit adhésif ou auto-adhésif peut être appliqué sur différents types de supports tels que des supports en papier, en matière plastique ou polymère, des supports tissés ou non tissés ou même sur le film de protection avant d'y apposer le substrat.

Lorsque les éléments adhésifs ou auto-adhésif double face sont commercialisés de manière sensiblement plane, ils sont généralement positionnés entre deux substrats « non-adhérent », c'est-à-dire sur des substrats à base de papier ou de matière plastique ou polymère sur laquelle un revêtement non adhérent est appliqué. Ces substrats non adhérents forment les films de protection sous forme de couches pelables (appelé en anglais release liners) apposées sur de nombreux élément adhésifs.

Lorsque ces élément adhésifs ou auto-adhésif double face sont commercialisés de manière enroulée comme les rouleaux d'adhésifs, certains pansements médicaux, certains rouleaux de films protecteurs, ils peuvent être appliqués sur un substrat « non-adhérent » qui comportera un substrat muni d'un revêtement non adhérent sur les deux faces du substrat formant le film de protection, également sous forme de couche pelable.

Il existe donc un grand nombre d'application pour des films de protection à base de silicium pour élément adhésif ou auto-adhésif.

Au sens de la présente invention, on appellera « non-adhérent » des surfaces qui présentent une faible adhérence. Cette adhérence se caractérise par rapport à une deuxième surface qui est mise en contact avec la surface à faible adhérence.

### Etat de la technique

Des films de protection à base de silicium pour élément adhésif appliqués sur un substrat sont connus comme par exemple les films de protection temporaire d'adhésif qui sont en général constitués d'une couche de silicone. Cette couche de silicone apporte des propriétés de faible adhésion au substrat. Celui-ci permet de protéger l'adhésif avant son application sur l'objet. La couche de silicone peut-être réticulée thermiquement ou par UV à la surface d'un substrat (papier ou plastique), déposée par voie chimique en phase liquide (en anglais wet chemical deposition), par voie chimique en phase vapeur assisté par plasma (en anglais plasma-assisted chemical vapour deposition), par réaction de composés ou de monomères contenant du fluor et/ou du silicium, par revêtement à l'aide de poudre (en anglais powder coating).

Malheureusement, ces films de protection temporaire d'adhésifs classiques ne sont pas utilisables dans certaines applications électroniques (comme par exemple pour les disques durs, ou les écrans tactiles positionnés par des adhésifs de qualité optique car le silicone appliqué sur le substrat est en partie transféré sur l'adhésif et contamine celui-ci de façon inacceptable car il interfère avec les composants électroniques.

Des films de protection à base de silicone pour dispositif médical adhésif ou auto-adhésif à usage médical appliqués sur un substrat sont connus comme par exemple les films de protection temporaire d'adhésif qui sont en général constitués d'une couche de silicone. Toutefois, ces films de protection temporaire d'adhésifs ne sont compatibles qu'avec les adhésifs acryliques, ou caoutchouc (rubber).

Des films de protection à base de fluorosilicone pour dispositif médical adhésif ou auto-adhésif à usage médical appliqués sur un substrat sont connus comme par exemple les films de protection temporaire d'adhésif à base de silicone.

Cette couche de silicone ou de fluorosilicone apporte des propriétés de faible adhésion au substrat. Celui-ci permet de protéger l'adhésif avant son application sur l'objet ou le corps. La couche de silicone peut-être réticulée thermiquement ou par UV à la surface d'un substrat (papier ou plastique), déposée par voie chimique en phase liquide (en anglais wet chemical deposition), par voie chimique en phase vapeur assisté par plasma (en anglais plasma-assisted chemical vapour depositon), par réaction de composés ou de monomères contenant du fluor et/ou du silicium, par revêtement à l'aide de poudre (en anglais powder coating).

Les techniques de traitement les plus couramment utilisées consistent en un dépôt par voie humide à base d'enduit de silicone. Ce type de traitement est réalisé en deux temps, la première phase du traitement consistant en un dépôt d'une émulsion, et la deuxième phase consistant au séchage du revêtement de surface formé. Cette couche de silicone formée apporte également des propriétés de faible adhésion au substrat permettant de protéger l'adhésif avant son application sur l'objet.

Malheureusement, les problèmes rencontrés par ces types de traitements sont nombreux, et peuvent être par exemple les suivants : Le processus de dépôt est parfois long et nécessite de nombreuses étapes intermédiaires. La dépense énergétique est élevée. Certains traitements par voie chimique à base d'enduit de silicone font intervenir des solvants organiques et donc n'est pas éco-compatible ; d'autres utilisent des émulsions en phase aqueuse qui font intervenir des émulsifiants présentant un risque de transfert sur l'adhésif. Lors de l'application d'un substrat possédant un tel revêtement de surface en tant que support d'un adhésif, par exemple en tant que support d'une étiquette, il existe une possibilité non négligeable de transfert, par exemple, de matière siliconée sur l'adhésif, ce qui a pour effet de réduire son pouvoir collant ou sur toute surface venant au contact de l'enduit, ce qui a pour effet de générer une contamination indésirable.

Alternativement, en présence d'un élément auto-adhésif, comme par exemple un élément auto-adhésif à base de silicone, le transfert de matière siliconée du film de protection sur l'élément auto-adhésif peut d'une part réduire son pouvoir d'adhésion, mais peut également réagir avec la matière à base de silicium de l'élément adhésif ou auto-adhésif. En effet, les éléments adhésifs ou auto-adhésif siliconé sont formés à partir d'agent de réticulation, de catalyseur et de silicone et la réaction n'est souvent pas complète, auquel cas un transfert de matière siliconée sur l'élément auto-adhésif peut générer des produits de réaction non contrôlés et/ou indésirables car il y a création de liens chimiques entre l'adhésif ou l'autoadhésif à base de silicone et le film de protection, ce qui réduit, voire anéanti ses capacités de pelage, ce qui représente un inconvénient de taille, particulièrement ennuyeux dans le domaine médical, plus précisément dans le domaine des dispositifs médicaux (*voir l'article «* Release liner Selection for drug delivery and Medical device design - Engineering 360 Media Solutions August 2017)*.*

Ceci s'applique tant pour des films protecteurs utilisés dans l'industrie électronique que pour les dispositifs médicaux, comme des pansements, des patchs, des électrodes à appliquer sur la peau. Dans ce dernier cas, la réaction non contrôlée peut provoquer des réactions immunitaires ou allergiques, ou des non-compatibilités du produit avec le secteur médical. De plus, la libération de matière siliconée sur l'élément auto-adhésif formant le pansement peut libérer la matière siliconée dans la plaie sous-jacente au pansement, ce qui n'est évidemment pas souhaitable.

Il existe donc un besoin général de disposer de films de protection présentant un faible relarguage de silicone pour ne pas diminuer les qualités adhérentes des éléments adhésifs, mais également des besoins spécifiques pour les dispositifs médicaux adhésifs ou auto-adhésifs à base de silicone à usage médical, dans le secteur médical et dans le domaine de l'électronique où la contamination par les silicones est à proscrire. En effet, la contamination des composants électroniques à l'état fini par des étiquettes, la contamination de l'atmosphère des salles blanches, la contamination des plaies par des silicones ou la survenance de réactions non contrôlées entre le substrat auto-adhésif et le silicone potentiellement libéré du film de protection sont tout à fait indésirable.

Il existe également les films de protection temporaire d'adhésif sans silicone. Si ces films sans silicone ne présentent pas de risque de contamination par des silicones de l'environnement ou de l'adhésif, ils présentent malheureusement des forces de pelages trop élevées et ont un effet "zippy" (pelage par à-coup), qui est gênant pour l'utilisateur.

On connaît également de l'art antérieur les documents WO2013/032771, US2015/368418 et US2015/147510 qui ne permettent malheureusement pas de solutionner les problèmes mentionnés ci-avant.

### Résumé de l'invention :

Il est prévu suivant la présente invention un film de protection à base de silicium, plus particulièrement à base de silicone, en particulier à base de polysiloxane pour éléments adhésifs ou auto-adhésifs tel qu'indiqué au début caractérisé en ce que ledit film de protection est à base de silicone choisi parmi les siloxanes comportant un groupe caractéristique cyclique et présente un taux de silicone extractible inférieur ou égal à 100 ng/cm², de préférence inférieur ou égal à 50 ng/cm², de manière plus préférentielle, inférieur ou égale à 20 ng/cm², et de manière encore plus préférentielle inférieur à 10 ng/cm², préférentiellement inférieur à 5 ng/cm², étant mesuré par la quantité de silicone libéré sous forme de monomères ou d'oligomères, soit non volatiles (IDEMA Standards M7-98 "Organic Contamination as Nonvolatile Residue (NVR)", ECSS-Q-ST-70-05C "Détection of organic contamination of surfaces by infrared spectroscopy", Seagate 20800032-001 Rev C. & 20800014-001 Rev G, Western Digital 2092-772141 Rev AD & 2092-771888 Rev AC), soit volatiles (IDEMA Standards M11-99 "General Outgas Test Procedure by Dynamic Headspace Analysis", Seagate 20800020-001 Rev N, Western Digital 2092-001026 Rev AC & 2092-771888 Rev AC).

Par exemple, il peut s'agir d'un film de protection à base de polysiloxane de grade médical pour adhésif ou auto-adhésif à base de silicone pour dispositif médicaux, et maintien une relative inertie par exemple avec des substances médicamenteuses qui seraient diffusées au travers de l'adhésif
Il est en effet apparu selon la présente invention qu'il était possible de fournir un film de protection dans lequel la contamination par transfert est particulièrement peu élevée tout en offrant la possibilité de recourir à des silicones dont les caractéristiques de pelage sont améliorées, sans devoir utiliser de molécules organiques ou fluorés, lesquels engendrent d'autres difficultés.

De plus, l'utilisation de film de protection à base de silicone permet avantageusement de conférer un caractère hydrophone au substrat sur lequel le film de protection est apposé, ce qui permet de l'utiliser dans des domaines tels que dans l'électronique, mais aussi dans le secteur médical et préserve les qualités de l'élément adhésif au cours du temps.

Le film de protection à base de silicium pour éléments adhésifs ou auto-adhésifs selon la présente invention présente à la fois une faible énergie de surface et une faible adhérence (effet dit « release ») tout en étant hydrophobe et ne relargue pratiquement pas de silicone extractible. La combinaison unique de ces caractéristiques du film de protection selon la présente invention le rend donc applicable dans des domaines dont les exigences sont élevées comme le secteur de l'électronique car il présente une force d'adhésion entre le film de protection (un substrat non adhésif et hydrophobe et un support rendu adhésif ou auto-adhésif, par exemple une étiquette, un ruban adhésif, un adhésif double face, un film protecteur, en particulier de grade électronique, un ruban adhésif ou un pansement, un patch, une électrode ou un pansement, agencé pour être en contact avec la peau, en particulier de grade médical, mais aussi particulièrement approprié pour les adhésifs et auto-adhésifs sensibles à la pression à base de silicone.

Selon la présente invention, lorsque l'on mesure le taux de silicone extractible, on mesure la quantité de silicone (en particulier sous forme de monomères ou d'oligomères) qui est libérée, soit après rinçage à l'hexane d'un échantillon de surface déterminée du film de protection (IDEMA Standards M7-98 "Organic Contamination as Nonvolatile Residue (NVR)", ou norme ECSS-Q-ST-70-05C "Détection of organic contamination of surfaces by infrared spectroscopy", Seagate 20800032-001 Rev C. & 20800014-001 Rev G, Western Digital 2092-772141 Rev AD & 2092-771888 Rev AC), soit par dégazage d'un échantillon de surface déterminée du film de protection (IDEMA Standards M11-99 "General Outgas Test Procedure by Dynamic Headspace Analysis", Seagate 20800020-001 Rev N, Western Digital 2092-001026 Rev AC & 2092-771888 Rev AC).

Le film de protection selon la présente invention est un film de protection applicable sur un substrat existant, comme par exemple une face de ruban adhésif existant ou peut comprendre un substrat en papier, textile tissé ou non tissé ou matière plastique.

Dans un mode préféré selon la présente invention, le film de protection à base de silicium pour éléments adhésifs ou auto-adhésifs présente une force de pelage inférieure ou égale à 2N/25 mm mesuré sur un adhésif Tesa^{™} 7475 mesurée selon la norme FTM10.

Dans un autre mode de réalisation préféré selon la présente invention, le film de protection à base de silicium pour éléments adhésifs ou auto-adhésifs présente une adhésion résiduelle supérieure ou égale à 80%, mesurée selon la norme FTM11.

Le film selon la présente invention présente en effet la caractéristique de ne pas endommager les performances de l'adhésif ou de l'auto-adhésif. L'adhésion résiduelle, c'est-à-dire la force d'adhésion de l'adhésif après exposition au film de protection temporaire d'adhésif est supérieure ou égale à 80% de la force d'adhésion initiale de l'adhésif (avant contact avec le film de protection temporaire d'adhésif).

Dans encore un mode de réalisation préféré selon la présente invention, le film de protection à base de silicium pour éléments adhésifs ou auto-adhésifs présente un taux d'azote inférieur ou égal à 1% atomique, mesuré par la technique XPS/ESCA.

Ces valeurs ont été déterminées à partir de spectres de survol avec un appareil de type Nova-Kratos^{™} avec une source Al-Kα monochromatisée (225 W) sur une aire de 300 µ x 700 µm en détection normale (angle de détection θ = 0°). La profondeur d'analyse dans ces conditions est inférieure à 10 nm.

Dans une variante selon la présente invention, le film de protection à base de silicium pour éléments adhésifs ou auto-adhésifs est formé d'une série de couches à base de silicone, déposées les unes sur les autres.

Avantageusement, dans le film de protection à base de silicium pour éléments adhésifs ou auto-adhésifs selon la présente invention, chaque couche de silicone présente une épaisseur comprise entre 5 nm et 100 nm, de préférence entre 10 nm et 60 nm, et encore plus préférentiellement entre 10 nm et 30 nm.

De manière préférée, le film de protection à base de silicium pour éléments adhésifs ou auto-adhésifs selon la présente invention possède une épaisseur comprise entre 5 nm et 100 nm, de préférence entre 10 nm et 60 nm et de manière plus préférée, entre 10 nm et 30 nm.

En effet, si l'épaisseur de la couche de silicone est trop faible, la couche ne recouvre pas le substrat de manière homogène, ce qui résulte en une augmentation de la force de pelage et d'un effet *zippy*; si l'épaisseur est trop importante, le risque de contamination et/ou transfert augmente car la quantité totale de silicone devient trop importante (sachant que la quantité totale de silicone susceptible d'être transféré dans le pire des cas est proportionnelle à l'épaisseur de la couche). On préfère que l'épaisseur se situe entre 10 nm et 60 nm, et encore plus préférentiellement entre 10 nm et 30 nm. Au-dessous de 5 nm le dépôt est inhomogène, ce qui provoque un détachement par à-coups (effet Zippy), indésirable. Par ailleurs, la force d'adhésion augmente lors que l'épaisseur est trop faible. Au-dessus d'une épaisseur de 30 nm les qualités recherchées de la couche ne s'améliorent plus, mais la quantité totale de silicone transférable devient inutilement importante.

Dans un mode particulier selon la présente invention, le film de protection à base de silicium pour éléments adhésifs ou auto-adhésifs présente au moins une surface présentant un angle de contact statique de l'eau supérieur à 90°, de préférence supérieur à 95°, et encore plus préférentiellement supérieur à 100° tel que mesuré sur un appareil Krüss DSA25.

Dans encore un mode particulier selon la présente invention, le film de protection à base de silicium pour éléments adhésifs ou auto-adhésifs présente une énergie de surface, inférieure à 30 mN/m, de préférence inférieure à 25 mN/m et encore plus préférentiellement inférieure à 20 mN/m, telle que calculée à partir des mesures d'angle de contact de deux liquides (eau et diiodométhane) selon le modèle d'Owens and Wendt

La présente invention se rapporte aussi à un ensemble comprenant au moins un film de protection à base de silicium pour éléments adhésifs ou auto-adhésifs selon la présente invention et un élément adhésif ou auto-adhésif présentant une première face munie de propriété adhésive ou auto-adhésive.

Plus particulièrement, dans l'ensemble selon la présente invention, ledit film de protection étant apposé sur ladite première face munie de propriété adhésive ou auto-adhésive sous forme d'un film de protection pelable.

De manière encore plus préférée, dans l'ensemble selon la présente invention, ledit élément adhésif ou auto-adhésif présente une première face munie de propriété adhésive ou auto-adhésive et une deuxième face non-adhésive, ledit film de protection étant apposé sur ladite deuxième face non-adhésive.

Dans une variante de l'ensemble selon la présente invention, ledit élément adhésif ou auto-adhésif présente une deuxième face munie de propriété adhésive ou auto-adhésive sur laquelle est éventuellement apposée un deuxième film de protection à base de silicium.

Dans une autre forme de réalisation selon la présente invention, ledit élément adhésif est une étiquette.

Dans encore une autre forme de réalisation selon la présente invention, ledit élément adhésif est un dispositif médical adhésif ou auto-adhésif est un pansement médical adhésif ou auto-adhésif, par exemple siliconé, un patch, une électrode adhésive agencée pour être en contact avec la peau.

La présente invention se rapporte également à un procédé de fabrication d'un film de protection à base de silicium pour éléments adhésifs ou auto-adhésifs muni d'au moins une couche de revêtement à base de silicone agencé pour reposer sur un substrat en papier, en textile tissé ou non tissé ou matière plastique.

Des procédés de fabrication de film de protection pour élément adhésifs ou auto-adhésif sont connus de l'état de la technique.

On connaît par exemple du document WO 2016 / 071 256, un procédé de traitement par plasma utilisant un réacteur à basse fréquence (2 à 100 kHz), avec une tension alternative de 5 à 50 kV pulsée à une fréquence de commutation comprise entre 30 et 5000 Hz. Ces impulsions permettent d'induire une modification des propriétés de la couche anti-adhérente, contrairement aux traitements par plasma conventionnel (non pulsé).

Le document WO 2016 / 071 256 décrit un film de protection comprenant un substrat et une couche anti-adhérente à base d'une longue liste de composés à base de silicone, mais aussi à base d'autres molécules telles que des alcanes et polyoléfines fluorées, des carbamates, de cires et de leurs mélanges. Les documents WO 2015/019063 ou WO 2015/019062 décrivent des films de protection similaires.

Ce document est toutefois muet quant au taux de silicone extractible du film de protection à base de silicone pour adhésif, ainsi qu'à l'adhésion résiduelle de l'adhésif après séparation du film de protection.

Il existe donc toujours un besoin d'identifier un procédé permettant de fabriquer un film de protection à base de silicium pour éléments adhésifs ou auto-adhésifs dans lequel le taux de silicone extractible est faible.

La présente invention s'inscrit dans le domaine spécifique des dépôts de surface permettant de rendre la surface d'un substrat hydrophobe et antiadhésive. Il serait désirable de disposer d'un nouveau procédé permettant de réaliser efficacement un dépôt d'un revêtement à caractère hydrophobe à la surface d'un substrat, ledit revêtement présentant à la fois une faible énergie de surface et une faible adhérence (effet dit « release ») tout en répondant aux problèmes cités précédemment qui sont rencontrés dans les procédés de traitements de surface existants. En effet, dans plusieurs domaines techniques, en particulier dans le domaine des films adhésifs, ces deux caractéristiques sont avantageusement combinées, ce qui permet de réduire de manière contrôlée la force d'adhésion entre un substrat non adhésif et hydrophobe (i.e. le substrat obtenu après le procédé de traitement de surface selon l'invention) et un substrat adhésif, par exemple une étiquette ou un dispositif médical adhésif ou auto-adhésif à base de silicone à usage médical. Par ailleurs, ce procédé doit pourvoir être réalisé sur des films plastiques en défilement.

Le procédé selon la présente invention est caractérisé en ce qu'il comprend les étapes suivantes :
a) défilement dudit substrat à partir d'une source de substrat dans une cellule de revêtement par plasma pour former ledit film de protection jusqu'à un point de collecte dudit film de protection
b) exposition d'une première face dudit substrat à un dépôt par plasma dans une enceinte dans lequel se trouve une atmosphère gazeuse composée au moins d'un gaz plasmagène à une décharge contrôlée par barrière diélectrique (DBD) dudit gaz plasmagène choisi parmi les gaz rares ou leurs mélanges en présence d'au moins un précurseur de silicone choisi parmi les siloxanes comportant un groupe caractéristique cyclique,
c) formation dudit revêtement à base de silicone à partir dudit précurseur de silicone dans ledit plasma et,
d) Collecte dudit film de protection muni de ladite moins une couche de revêtement à base de silicone.

Selon l'invention le problème est résolu par un procédé de traitement de surface d'un substrat en mouvement, notamment d'un film polymère souple ou semi-rigide ou de papier qui défile dans la zone de traitement. Plus précisément, il s'agit d'un procédé dans lequel le substrat est soumis à un plasma généré dans un mélange gazeux, ce qui conduit à la modification de l'état de surface de ce substrat, notamment par la formation d'un dépôt sur la surface précitée.

L'invention concerne en particulier un tel procédé, qui peut potentiellement être mis en oeuvre à une pression proche de la pression atmosphérique, et qui est approprié pour le traitement de surface continu de films polymère en bobines (procédé de type « roll-to-roll »).

Le procédé selon l'invention comprend une étape dans laquelle au moins une surface dudit substrat est exposée à une décharge contrôlée par barrière diélectrique (DBD = Dielectric Barrier Discharge, une technique connue en tant que telle) à pression atmosphérique d'un gaz plasmagène (choisi parmi les gaz nobles) en présence d'au moins un précurseur de silicium choisi parmi les siloxanes comportant un groupe caractéristique cyclique, pour former ledit revêtement sur ledit substrat en défilement.

Le film traité par le procédé selon l'invention présente à sa surface externe (c'est à dire la surface qui n'est pas en contact avec le substrat) une force d'adhérence inférieure à celle du film non revêtu, ladite force d'adhérence étant modulable par les paramètres de dépôt.

La combinaison de l'atmosphère plasmagène composé de gaz nobles et de précurseurs pulvérisés dans le plasma dans l'enceinte, lesquels sont choisis parmi les siloxanes comportant un groupe caractéristique cyclique permet d'atteindre de manière particulièrement surprenante une film de protection à base de silicium qui présente un taux d'extractible très réduit.

Avantageusement, selon la présente invention, ledit gaz plasmagène est l'argon ou l'hélium, et de préférence l'argon.

Dans une forme avantageuse de la présente invention, ledit précurseur de silicone est un cyclosiloxane.

De manière plus préférentielle, ledit précurseur de silicone est un cycloalkylsiloxane, de préférence un cyclométhylsiloxane.

De manière avantageuse ledit précurseur de silicone est le décaméthylcyclopentasiloxane (n° CAS 541-02-6) ou le octaméthylcyclotetrasiloxane (n° CAS 556-67-2), l'hexaméthylcyclotrisiloxane (n° CAS 541-05-9), le dodécaméthylcyclohexasiloxane (n°CAS 540-97-6) ou un mélange de deux ou plusieurs de ceux-ci.

Avantageusement, dans le procédé de fabrication selon la présente invention, ladite atmosphère gazeuse dans l'enceinte présente une teneur en oxygène inférieure ou égale à 50 ppm volumique, préférentiellement inférieure ou égale à 20 ppm volumiques, et encore plus préférentiellement inférieure ou égale à 10 ppm volumiques.

Dans une forme de réalisation préférentielle du procédé selon l'invention, ledit substrat défile à une vitesse de défilement de substrat comprise entre 10 et 60 m/min, de préférence entre 10 et 50 m/min, préférentiellement entre 20 et 40 m/min, avantageusement entre 25 et 40 m/min, de manière avantageuse entre 30 et 40 m/min.

Avantageusement, dans le procédé de fabrication selon la présente invention, ledit dépôt par plasma présente une durée de dépôt inférieure ou égale à 4 secondes, de préférence inférieure ou égale à 2 secondes, et encore plus préférentiellement inférieur ou égal à 1 seconde.

De manière très préférée le traitement se fait en un seul passage, et sans aucun post-traitement. Cela contribue à maximiser la productivité de la machine (exprimé en unité de surface traitée par unité de temps machine et à minimiser le coût d'exploitation du procédé.

Cela permet d'obtenir une vitesse de défilement importante, et conduit à une couche très mince. La vitesse de défilement importante implique une grande productivité (exprimée en unité de surface traitée par unité de temps machine), donc un coût d'exploitation faible du procédé. La faible épaisseur implique, d'une part, que la consommation en molécule précurseur par unité de surface traitée est faible (ce qui contribue à minimiser le coût d'exploitation du procédé), et, d'autre part, que la quantité totale de silicone par unité de surface qui peut théoriquement être transférée sur l'adhésif lorsque la couche est utilisée selon sa destination est faible.

Dans une mode de réalisation préférentiel selon la présente invention, ladite atmosphère gazeuse dans l'enceinte est à la pression atmosphérique ± 100 Pa.

On entend ici par pression proche de la pression atmosphérique une pression qui s'écarte de la pression atmosphérique par une différence de pression (positive ou négative) qui ne dépasse pas quelques dizaines ou une centaine de Pa. Plus précisément on préfère que la pression dans ladite enceinte s'écarte de la pression atmosphérique au plus de ± 100 Pa.

Dans une mode de réalisation préférentiel selon la présente invention, ladite décharge est à basse fréquence, de préférence avec une densité de puissance est comprise entre 0,10 W /cm² et 10 W /cm², plus préférentiellement entre 0,15 et 8 W/cm², plus particulièrement entre 0,2 et 5 W/cm², voire entre 0,25 W/cm² et 0.8 W/cm², et encore plus préférentiellement entre 0,35 W/cm² et 0.7 W/cm², l'unité de surface se référant à la surface cumulée des électrodes.

La présente invention se rapporte enfin à une utilisation d'un film de protection selon l'invention avec un élément adhésif ou auto-adhésif comprenant une première face munie de propriété adhésive ou auto-adhésive.

Dans une variante selon la présente invention, la présente invention se rapporte enfin à une utilisation d'un film de protection à base de polysiloxane pour adhésif ou auto-adhésif à base de silicone selon l'invention avec un élément adhésif ou auto-adhésif à base de silicone, comme par exemple un adhésif sensible à la pression à base de silicone ou dispositif médical adhésif comprenant une première face adhésive sur laquelle l'adhésif se trouve.

Dans une utilisation préférée, le film de protection est sous forme d'un film de protection pelable, en contact avec la première face.

Dans une utilisation particulière selon la présente invention, ledit élément adhésif présente une première face munie de propriété adhésive ou auto-adhésive et une deuxième face non-adhésive, ledit film de protection étant apposé sur ladite deuxième face non-adhésive.

Dans une autre utilisation particulière selon la présente invention, ledit élément adhésif présente une deuxième face munie de propriété adhésive ou auto-adhésive sur laquelle est éventuellement apposé un deuxième film de protection à base de silicium.

Dans une utilisation particulièrement préférée, ledit élément adhésif est une étiquette, un ruban adhésif double face, un film de protection à base de silicone sensible à la pression.

Dans une autre utilisation particulièrement préférée, ledit dispositif médical adhésif ou auto-adhésif est un pansement médical adhésif ou auto-adhésif, par exemple siliconé, un patch, une électrode adhésive agencée pour être en contact avec la peau
De préférence, les utilisations susdites surviennent dans une salle blanche. De même, le procédé de fabrication selon la présente invention peut-être réalisé dans une salle blanche.

Le film de protection selon l'invention peut en outre stérilisé par des techniques conventionnelles (stérilisation gamma, en milieu gazeux, UV....)

### Description de l'invention

D'autres caractéristiques, détails et avantages de l'invention ressortiront de la description donnée ci-après, à titre non limitatif et en faisant référence aux exemples et à la figure annexés

Sauf indication contraire, les concentrations de gaz données en ppm (partie par million) sont des ppm volumiques.

Selon l'invention, le substrat est exposé à un plasma à pression atmosphérique. Le plasma est généré dans un gaz plasmagène (He, Ar) contenant un ou plusieurs précurseurs de siloxane ; ce précurseur sera spécifié ci-dessous. L'exposition du substrat au plasma et aux molécules de précurseur provoque la formation d'un dépôt mince à la surface du substrat. Ce dépôt mince confère au film de protection pour élément adhésif une faible adhésion et une très faible quantité de silicone extractible. De plus ce dépôt ne réduit pas de manière significative l'adhésion subséquente de l'adhésif au film de protection qui le comprend.

Dans le procédé de fabrication du film de protection selon la présente invention, un dépôt par plasma à pression atmosphérique permet donc de produire une couche anti-adhésive sur un substrat pour former un film de protection (release liner).

Le procédé selon l'invention peut être mis en oeuvre dans un réacteur à l'intérieur duquel se produit une décharge à barrière diélectrique (DBD - Dielectric Barrier Discharge).

Avantageusement le substrat défile à travers la zone de traitement en mode bobine-à-bobine (« Roll-to-roll » en anglais).

Dans un mode de réalisation préféré le réacteur de traitement est de type Roll-to-roll DBD ; il comprend typiquement les éléments suivants :
- Un cylindre de traitement (par exemple de diamètre 400 mm et de longueur 800 mm) avec un revêtement diélectrique approprié. Ce cylindre entraîne le film flexible à traiter sous les électrodes de traitement à une vitesse choisie dans la plage comprise entre 5 à 200 m/min.
- Une enceinte de traitement située au-dessus du cylindre de traitement et comportant des électrodes et les dispositifs d'injection des gaz ; des dispositifs d'injection attenants aux électrodes permettent d'injecter le ou les gaz directement devant les électrodes et sur la surface du film à traiter, à savoir: le gaz inertant, le gaz plasmagène, le précurseur, le gaz vecteur, l'éventuel gaz dopant.

Les électrodes sont reliées à un générateur HV basse fréquence (typiquement une à quelques dizaines de kHz) et de puissance variable (0,1 à 10 W/cm²). La densité de puissance est comprise entre 0,10 W /cm² et 10 W /cm², plus préférentiellement entre 0,15 et 8 W/cm², plus particulièrement entre 0,2 et 5 W/cm², voire entre 0,25 W/cm² et 0.8 W/cm², et encore plus préférentiellement entre 0,35 W/cm² et 0.7 W/cm², l'unité de surface se référant à la surface cumulée des électrodes.

Un système d'extraction dans l'enceinte de traitement permet d'évacuer le gaz plasmagène ainsi que d'éventuels sous-produits créés dans le plasma et non transformés en dépôt. Le gaz plasmagène génère le plasma, c'est une spécificité de la décharge à pression atmosphérique. Le gaz vecteur est injecté pour accompagner le précurseur (monomère). Le dopant peut être injecté en faible quantité par rapport aux gaz inertant, plasmagène et vecteurs. Le gaz inertant, le gaz plasmagène et/ou le gaz vecteur peuvent être identiques ou différents, et peuvent être l'argon et/ou l'hélium.

Avantageusement, on maintient dans le réacteur de traitement une atmosphère de traitement inertée avec un taux d'oxygène inférieur à 50 ppm, préférentiellement inférieur à 20 ppm, et encore plus préférentiellement inférieur à 10 ppm.

Un réacteur tel que celui-ci est par exemple décrit dans la demande de brevet WO 2016/170242 au nom de la demanderesse.

L'espacement entre la surface active des électrodes et le film défilant sous elles sur le cylindre de traitement doit être réglé de manière très précise afin d'assurer la stabilité et l'homogénéité du plasma, deux conditions nécessaires pour pouvoir obtenir un dépôt mince avec une homogénéité spatiale acceptable. A titre d'exemple, si la distance entre le film et la surface active des électrodes est réglé à 1 mm, cette distance est avantageusement stable avec un écart-type de ± 0,2 mm.

Le précurseur est avantageusement injecté directement dans la décharge, ceci permet de maximiser la concentration de celui-ci entre les électrodes. Ceci est utile pour rendre possible le traitement en un seul passage. Une forte concentration de précurseur dans la décharge conduit en générale à la formation de poudre dans le plasma ; ces poudres rendent le produit inutilisable et provoquent de nombreux problèmes de maintenance du réacteur. Avec une vitesse de gaz élevée on peut réduire le temps de résidence des molécules de précurseur dans le plasma ; cela évite la formation de poudre. Ainsi on peut travailler à une concentration de précurseur importante, ce qui permet de réaliser le dépôt en un seul passage sans former de poudre.

Il faut également noter qu'une exposition au plasma du film de protection formé diminue les performances de la couche mince. Un dépôt en plusieurs passages n'est donc pas forcément souhaitable.

A titre d'exemple, les paramètres suivants ont été utilisés dans un réacteur du type de celui décrit dans WO 2016/170242 :
Le débit du précurseur est de préférence compris entre 8 g/h et 14 g/h, plus préférentiellement compris entre 8,5 g/h et 13 g/h ; avec une valeur de 10 g/h on obtient un bon résultat, mais avec une valeur de 5 g/h ou de 20 g/h le résultat est moins bon. La vitesse du substrat est de préférence comprise entre 3 m/min et 8 m/min, de préférence entre 3,5 m/min et 8,5 m/min, mais avec une valeur de 2 m/min ou de 10 m/min le résultat est moins bon. La puissance est de préférence comprise entre 450 W et 700 W, plus préférentiellement entre 500 W et 650 W, mais avec une valeur de 300 W ou de 900 W le résultat est moins bon. Le gaz plasmagène est de préférence de l'argon.

Dans le cadre de la présente invention, le précurseur doit être un siloxane comportant un groupe caractéristique cyclique, comme par exemple un cycloalkylsiloxane, de préférence un cyclométhylsiloxane. Les inventeurs ont découvert de manière surprenante que les alkylsiloxanes linéaires, ne comportant donc pas de groupe caractéristique cyclique ne donnent pas des résultats satisfaisants, alors que l'utilisation de siloxanes comportant un groupe caractéristique cyclique, comme des cycloalkylslioxanes, et en particulier de cyclométhylsiloxanes, permet de résoudre le problème auquel cherche à répondre la présente invention.

De manière avantageuse, ledit précurseur de silicone est le décaméthylcyclopentasiloxane (n° CAS 541-02-6) ou le octaméthylcyclotetrasiloxane (n° CAS 556-67-2), l'hexaméthylcyclotrisiloxane (n° CAS 541-05-9), le dodécaméthylcyclohexasiloxane (n°CAS 540-97-6) ou un mélange de deux ou plusieurs de ceux-ci.

### Exemples.-

### Exemple 1.-

On a réalisé des traitements de surface par dépôt d'une couche mince dans un plasma d'argon à pression atmosphérique. Le gaz plasmagène était l'argon. Le tableau 1 ci-dessous rassemble les meilleurs résultats obtenus sur un substrat PET pour former un film de protection selon l'invention. On a caractérisé en particulier la force de pelage et l'adhésion résiduelle de l'adhésif après enlèvement du film de protection en PET traité.

Plusieurs types de monomères organosiloxane ont été utilisés pour réaliser des dépôts de couches anti-adhérentes à base de silicium, dans des proportions de monomère variant de 100 à 10 000 ppm (volumiques) :

| | |
|---|---|
| • DMCPS | = décaméthylcyclopentasiloxane ; n° CAS 541-02-6 ; |
| • OMCTS | = octaméthylcyclotetrasiloxane, n° CAS 556-67-2 ; |
| • OTES | = triethoxy(octyl)silane, n° CAS 2943-75-1 |
| • HMDSO | = hexaméthyldisiloxane, n° CAS 107-46-0 ; |

Deux types de monomères précurseur de silicone réactif fonctionnalisé OH ou NH (Silmer^{™}) ont également été utilisés pour réaliser des dépôts minces à base de silicone, dans des proportions de monomère variant de 100 à 5000 ppm. La désignation commerciale de ces monomères est : Silmer^{™} NH Di-8 et Silmer^{™} OH A0 UP (fournis par Siltech). Il s'agit de polyalkylsiloxanes linéaires ; plus précisément Silmer^{™} NH Di-8 est un polydiméthylsiloxane linéaire aminé (masse moléculaire environ 860 à 940) comportant des groupes NH terminaux, et Silmer^{™} OH A0 UP est un polydiméthylsiloxane avec une fonction propyl hydroxy-terminale (masse moléculaire environ 280).

A titre de comparaison on a étudié un type de monomère non siliconé (Dodécyl vinyl ether, n° CAS 765-14-0) pour réaliser des dépôts release sans silicium, dans une proportion de monomère de 100 ppm. Un monomère de type fluorosilicone a également été testé.

Les meilleurs résultats ont été obtenus sur film PET de laize 600 mm, traité à 20 m/min par un plasma d'Ar de 600 W dans lequel est introduit 60 g/h de DMCPS (échantillon appelé « DMCPS »), comme on peut le constater, bien qu'un prétraitement puisse éventuellement être effectué, il n'a pas été nécessaire dans le cas présent tout en permettant d'excellents résultats. Le même procédé préféré a été réalisé sur papier et sur film BOPP, avec d'excellents résultats.

Le tableau 1 résume des caractéristiques du film de protection mesurées sur les échantillons produits selon la présente invention.

**Tableau 1.-**

| Monomère | θₑₐᵤ [degrés] | Es [mN/m] | Fp 7475 [N/25mm] | Fp MD15 [N/25 mm] | AR Nitto 31b |
|---|---|---|---|---|---|
| Aucun | 70 | 52,5 ± 0,5 | 22,6 ± 0,5 | | |
| HMDSO (*) | 102 - 104 | 25 - 30 | 5 ± 5 (Zippy) | | |
| DMCPS (+) | 112 ±1 | 21 ± 2 | 1,0 ± 0,5 | 0,25 ± 0,10 | 95 |
| Dodécylvinyl-éther (-) | | | 9,42 ± 0,73 | | |
| OTES (*) | | | 11,01 ± 2,82 | | |
| Silmer^{™} NH Di-8 (*) | | | 9,8 ± 6,1 | | |
| Silmer^{™} OH (*) | | | 2,9 ± 2 | | |
| OMCTS (+) | 110 | 64 | 0,4 ± 0,03 | 0,11 ± 0,09 | 97 |
| (+) Cyclosiloxane selon l'invention. (*) Siloxane linéaire, hors invention. | | | | | |
| (-) hors invention | | | | | |

| | | | | | |
|---|---|---|---|---|---|
| Dans ce tableau : - l'indication "Zippy" indique que l'adhésif se détache par à-coups du film de protection ; - θₑₐᵤ est l'angle de contact statique de l'eau mesuré sur un appareil Krüss DSA25 ; - Es est l'énergie de surface calculée à partir des mesures d'angle de contact de deux liquides (eau et diiodomethane) selon le modèle d'Owens and Wendt ; - Fp 7475 est la force de pelage de l'adhésif TESA 7475 mesurée selon la norme FTM 10 avec appareil AR1000 ; - Fp MD15 est la force de pelage de l'adhésif connu sous la référence MD15 (adhésif acrylique ultra-pur pour applications dans le domaine de l'électronique), fourni par la société JDC (Tennessee, U.S.A.). - AR Nitto 31b est l'adhésion résiduelle de l'adhésif Nitto 31b mesurée sur plaque de verre nettoyée selon la norme FTM 11. Cet adhésif est utilisé par l'homme de l'art pour la mesure de l'adhésion résiduelle; | | | | | |

Les normes FTM 10 et FTM 11, connues de l'homme du métier, sont éditées par FINAT (Fédération Internationale des fabricants et transformateurs d'Adhésifs et Thermocollants sur papiers et autres supports) :
- FTM 10 *"Quality of silicone coated substrates for self-adhesive laminates: release force (300 mm per minute)",*
- FTM 11 *"Quality of silicone coated substrates for self-adhesive laminates: subséquent adhesion"*

Le tableau 2 montre les résultats de dosages (en pourcents atomiques) du carbone, oxygène, silicium et azote dans trois échantillons traités par plasma à pression atmosphérique. Ces valeurs ont été déterminées à partir de spectres de survol avec un appareil de type Nova-Kratos^{™} avec une source Al-Kα monochromatisée (225 W) sur une aire de 300 µ x 700 µm en détection normale (angle de détection θ = 0°). La profondeur d'analyse dans ces conditions est inférieure à 10 nm.

**Tableau 2.-**

| Echantillon | Carbone [% atomique] | Oxygène [% atomique] | Silicium [% atomique] | Azote [% atomique] |
|---|---|---|---|---|
| DMCPS Argon 1 | 50,7 | 25,8 | 25,0 | - |
| DMCPS Azote | 44,7 | 33,3 | 16,3 | 5,7 |
| DMCPS Argon 2 | 60,9 | 30,4 | 8,7 | - |

On note que l'échantillon « DMCPS Argon 1 » correspond à l'échantillon « DMCPS » du tableau 1. L'échantillon « DMCPS Azote » a été préparé avec un plasma d'azote comprenant le précurseur DMCPS : cette couche comprend de l'azote. Sa valeur Fp est trop élevée. L'échantillon « DMCPS Argon 2 » a été préparé dans des conditions similaires à celles de l'échantillon « DMCPS Argon », mais présente une épaisseur inférieure à 10 nm : le spectre XPS fait apparaître une contribution de signal due au substrat, et les concentrations indiquées ne reflètent donc pas la composition de la couche déposée par le procédé selon l'invention.

On a déterminé la teneur en siloxane résiduelle extractible pour un échantillon de film plastique traité par le procédé selon l'invention en utilisant le monomère DMCPS. Pour déterminer cette teneur en siloxane résiduelle on a rincé la surface traitée sur 50 cm² au n-hexane, et la phase liquide a été concentrée sur une lame ZnSe et analysée par spectroscopie infrarouge à transformée de Fourier (FTIR) (résolution 4 cm⁻¹, 8 scans, vitesse du miroir 0,20 cm/s). On a déterminé la teneur en siloxane sur la base de l'intensité d'une bande spectrale caractéristique du siloxane (entre environ 2800 et 300 cm⁻¹ tel qu'indiqué dans le document de référence du ECSS « *Space product assurance : Détection of organic contamination of surfaces by infrared spectroscopy* » n° ECSS - Q - ST - 70 - 05C du 6 mars 2009 au point e. page 21 et tableau 5.1), calibrée en intensité par une série de standards de poly(diméthylsiloxane), un produit commercial de chez Aldrich, référence 378380 (n° CAS 63148-62-9). Les résultats de cette mesure sont indiqués dans le tableau 3. Dans une autre procédure l'échantillon est chauffé sous un flux de gaz constant. L'identité et la quantité des molécules émises par l'échantillon sont déterminées par chromatographie gazeuse avec détection par spectrométrie de masse (GC-MS) (voir 4^{ème} colonne du tableau 3).

Le tableau 3 montre les résultats des mesures d'extraction de composés siliconés sur les échantillons traités selon les méthodes décrites ci-dessus.

**Tableau 3.-**

| Monomères | Fp MD 15 (N/inch) | Silicone extractible (non volatile) mesuré par FTIR (ng/cm²) | Silicone extractible (volatile) mesuré par méthode de dégazage DHS (ng/cm²) |
|---|---|---|---|
| DMCPS | 0,31 ± 0,21 | 4,15 | 0,24 |
| DMCPS | 0,29 ± 0,23 | 9,67 | Non détecté |
| DMCPS | 0,24 ± 0,19 | 9,46 | 0,67 |
| DMCPS | 0,19 + 0,15 | 0,97 | 0,04 |

### Exemple 2.-

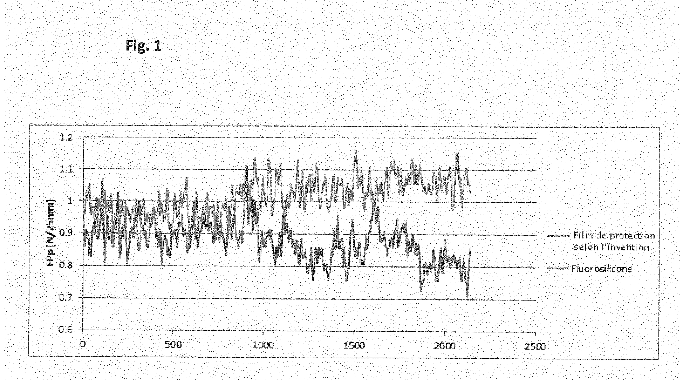

On a comparé la force de pelage (mesure selon la norme FINAT 10) d'un adhésif silicone sur un film de protection selon l'invention avec la force de pelage du même adhésif sur un film de protection commercial à base de fluorosilicone après 20 heures de mise en contact à une température de 70°C et un taux d'humidité de 50%. Les résultats sont indiqués dans la figure 1. Comme on peut le constater, la force de pelage du film de protection selon la présente invention est moins élevée que celle du film de protection à base de fluorosilicone.

La valeur moyenne de la force de pelage Fp d'un adhésif sur un film de protection selon l'invention est de 0,9 N/25mm.

La valeur moyenne de la force de pelage Fp d'un adhésif sur un film de protection commercial (Fluorosilicone) est de 1.0 N/25mm.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Film de protection à base de silicium pour éléments adhésifs ou auto-adhésifs, **caractérisé en ce que** ledit film de protection est à base de silicone choisi parmi les siloxanes comportant un groupe caractéristique cyclique et présente un taux de silicone extractible inférieur ou égal à 100 ng/cm2, de préférence inférieur ou égal à 50, de manière préférentielle inférieur ou égal à 20 ng/cm2, et de manière encore plus préférentielle inférieur à 10 ng/cm², préférentiellement inférieur à 5 ng/cm², étant mesuré par la quantité de silicone libéré sous forme de monomères ou d'oligomères, soit non volatiles (IDEMA Standards M7-98 "Organic Contamination as Nonvolatile Residue (NVR)", ECSS-Q-ST-70-05C "Détection of organic contamination of surfaces by infrared spectroscopy", Seagate 20800032-001 Rev C. & 20800014-001 Rev G, Western Digital 2092-772141 Rev AD & 2092-771888 Rev AC), soit volatiles (IDEMA Standards M11-99 "General Outgas Test Procedure by Dynamic Headspace Analysis", Seagate 20800020-001 Rev N, Western Digital 2092-001026 Rev AC & 2092-771888 Rev AC).

2. Film de protection à base de silicium pour éléments adhésifs ou auto-adhésifs selon la revendication 1, comprenant en outre un substrat en papier, textile tissé ou non tissé ou matière plastique

3. Film de protection à base de silicium pour éléments adhésifs ou auto-adhésifs selon la revendication 1 ou la revendication 2, présentant au moins l'une des caractéristiques suivantes choisie parmi une force de pelage inférieure ou égale à 2N/25 mm mesuré sur un adhésif Tesa^{™} 7475 mesurée selon la norme FTM10, présentant une adhésion résiduelle supérieure ou égale à 80%, mesurée selon la norme FTM11, une surface présentant un angle de contact statique de l'eau supérieur à 90°, de préférence supérieur à 95°, et encore plus préférentiellement supérieur à 100°, tel que mesuré sur un appareil Krüss DSA25, une énergie de surface, inférieure à 30 mN/mètre, de préférence inférieure à 25 nN/m et encore plus préférentiellement inférieure à 20 nN/m, telle que calculée à partir des mesures d'angle de contact de deux liquides (eau et diiodomethane) selon le modèle d'Owens and Wendt .

4. Film de protection à base de silicium pour éléments adhésifs ou auto-adhésifs selon l'une quelconque des revendications 1 à 3, présentant taux d'azote inférieur ou égal à 1% atomique, mesuré selon la technique XPS/ESCA.

5. Ensemble comprenant au moins un film de protection à base de silicium pour éléments adhésifs ou auto-adhésifs selon l'une quelconque des revendications 1 à 4, et un élément adhésif ou auto-adhésif présentant une première face munie de propriété adhésive ou auto-adhésive.

6. Ensemble selon la revendication 5, dans lequel ledit élément adhésif est une étiquette, un ruban adhésif, un adhésif double face, un film protecteur, en particulier de grade électronique, un dispositif médical adhésif ou auto-adhésif, comme un pansement médical adhésif ou auto-adhésif, par exemple siliconé, un patch, une électrode adhésive agencée pour être en contact avec la peau, en particulier de grade médical.

7. Procédé de fabrication d'un film de protection à base de silicium pour éléments adhésifs ou auto-adhésifs selon l'une quelconque des revendications 1 à 6, muni d'au moins une couche de revêtement à base de silicone agencé pour reposer sur un substrat en papier, textile tissé ou non tissé ou matière plastique comprenant les étapes suivantes
a) défilement dudit substrat à partir d'une source de substrat dans une cellule de revêtement par plasma pour former ledit film de protection jusqu'à un point de collecte dudit film de protection
b) exposition d'une première face dudit substrat à un dépôt par plasma dans une enceinte dans lequel se trouve une atmosphère gazeuse composée au moins d'un gaz plasmagène à une décharge contrôlée par barrière diélectrique (DBD) dudit gaz plasmagène choisi parmi les gaz rares ou leurs mélanges en présence d'au moins un précurseur de silicone choisi parmi les siloxanes comportant un groupe caractéristique cyclique,
c) formation dudit revêtement à base de silicone à partir dudit précurseur de silicone dans ledit plasma et,
d) Collecte dudit film de protection muni de ladite au moins une couche de revêtement à base de silicone.

8. Procédé de fabrication d'un film de protection à base de silicium pour éléments adhésifs ou auto-adhésifs selon la revendication 7, dans lequel ladite atmosphère gazeuse dans l'enceinte présente une teneur en oxygène inférieure ou égale à 50 ppm volumique, préférentiellement inférieure ou égale à 20 ppm volumiques, et encore plus préférentiellement inférieure ou égale à 10 ppm volumiques.

9. Procédé selon la revendication 7 ou la revendication 8, dans lequel ledit substrat défile à une vitesse de défilement de substrat comprise entre 10 et 60 m/min, de préférence entre 10 et 50 m/min, préférentiellement entre 20 et 40 m/min, avantageusement entre 25 et 40 m/min, de manière avantageuse entre 30 et 40 m/min et/ou ladite atmosphère gazeuse dans l'enceinte est à la pression la pression atmosphérique ± 100 Pa et/ou ledit dépôt par plasma présente une durée de dépôt inférieure ou égale à 4 secondes, de préférence inférieure ou égale à 2 secondes, et encore plus préférentiellement inférieur ou égal à 1 secondes et/ou ladite décharge est à radiofréquence, de préférence avec une densité de puissance est comprise entre 0,10 W/cm² et 10 W/cm², plus préférentiellement entre 0,15 W/cm², plus particulièrement entre 0,2 W/cm², voire entre 0,25 W/cm² et 0.8 W/cm², et encore plus préférentiellement entre 0,35 W/cm² et 0.7 W/cm², l'unité de surface se référant à la surface cumulée des électrodes .

10. Utilisation d'un film de protection selon l'une quelconque des revendications 1 à 4, avec un élément adhésif comprenant une première face munie de propriété adhésive ou auto-adhésive et éventuellement une deuxième face non-adhésive, ledit film de protection étant apposé sur ladite première face munie de propriété adhésive ou auto-adhésive et/ou deuxième face non-adhésive .

11. Utilisation selon la revendication 10, dans laquelle ledit élément adhésif est une étiquette, un ruban adhésif, un adhésif double face, un film protecteur, en particulier de grade électronique, un dispositif médical adhésif ou auto-adhésif, comme un pansement médical adhésif ou auto-adhésif, par exemple siliconé, un patch, une électrode adhésive agencée pour être en contact avec la peau, en particulier de grade médical.

12. Utilisation selon l'une quelconque des revendications 10 ou 11, dans une salle blanche.

## Patentansprüche

1. Schutzfilm auf Siliciumbasis für klebende oder selbstklebende Elemente, **dadurch gekennzeichnet, dass** der Schutzfilm auf Silikon basiert, ausgewählt aus Siloxanen, die eine charakteristische zyklische Gruppe umfassen, und einen Gehalt an extrahierbarem Silikon von kleiner oder gleich 100 ng/cm², vorzugsweise kleiner oder gleich 50, bevorzugt kleiner oder gleich 20 ng/cm², und noch bevorzugter kleiner als 10 ng/cm², vorzugsweise kleiner als 5 ng/cm², aufweist, gemessen anhand der Menge an Silikon, die in Form von Monomeren oder Oligomeren, entweder nicht flüchtig (IDEMA-Standards M7-98 "Organic Contamination as Nonvolatile Residue (NVR)", ECSS-Q-ST-70-05C "Detection of organic contamination of surfaces by infrared spectroscopy", Seagate 20800032-001 Rev C. & 20800014-001 Rev G, Western Digital 2092-772141 Rev AD & 2092-771888 Rev AC), oder flüchtig (IDEMA-Standards M11-99 "General Outgas Test Procedure by Dynamic Headspace Analysis", Seagate 20800020-001 Rev N, Western Digital 2092-001026 Rev AC & 2092-771888 Rev AC), freigesetzt wird.

2. Schutzfilm auf Siliciumbasis für klebende oder selbstklebende Elemente nach Anspruch 1, der weiter ein Substrat aus Papier, gewebtem Textil oder Vlies oder Kunststoff umfasst.

3. Schutzfilm auf Siliciumbasis für klebende oder selbstklebende Elemente nach Anspruch 1 oder Anspruch 2, der mindestens eines der folgenden Kennzeichen aufweist, ausgewählt aus einer Schälfestigkeit von kleiner oder gleich 2N/25 mm, gemessen an einem TesaTM 7475-Klebeband, gemessen nach der Norm FTM10, eine Restklebkraft von größer oder gleich 80 % aufweisend, gemessen nach der Norm FTM11, einer Oberfläche, die einen statischen Wasserkontaktwinkel von größer als 90°, vorzugsweise größer als 95°, und noch bevorzugter größer als 100° aufweist, gemessen auf einem Krüss-Gerät DSA25, einer Oberflächenenergie von kleiner als 30 mN/m, vorzugsweise kleiner als 25 nN/m und noch bevorzugter kleiner als 20 nN/m, auf Grundlage der Kontaktwinkelmessungen zweier Flüssigkeiten (Wasser und Diiodmethan) nach dem Modell von Owens und Wendt berechnet.

4. Schutzfilm auf Siliciumbasis für klebende oder selbstklebende Elemente nach einem der Ansprüche 1 bis 3, der einen Stickstoffgehalt von kleiner oder gleich 1 Atom-%, gemessen nach der XPS/ESCA-Technik, aufweist.

5. Anordnung, die mindestens einen Schutzfilm auf Siliciumbasis für klebende oder selbstklebende Elemente nach einem der Ansprüche 1 bis 4 und ein klebendes oder selbstklebendes Element umfasst, das eine erste Seite aufweist, die mit klebender oder selbstklebender Eigenschaft ausgestattet ist.

6. Anordnung nach Anspruch 5, wobei das klebende Element ein Etikett, ein Klebestreifen, ein doppelseitiges Klebeband, ein Schutzfilm, insbesondere von elektronischer Güte, eine klebende oder selbstklebende medizinische Vorrichtung, wie etwa ein klebender oder selbstklebender, zum Beispiel silikonisierter, medizinischer Verband, ein Pflaster, eine Klebeelektrode, die dafür beschaffen ist, sich mit der Haut in Kontakt zu befinden, insbesondere von medizinischer Güte, ist.

7. Verfahren zur Herstellung eines Schutzfilms auf Siliciumbasis für klebende oder selbstklebende Elemente nach einem der Ansprüche 1 bis 6, der mit mindestens einer Beschichtungsschicht auf Silikonbasis ausgestattet ist, die dafür beschaffen ist, auf einem Substrat aus Papier, gewebtem Textil oder Vlies oder Kunststoff zu ruhen, die folgenden Schritte umfassend
a) Laufen des Substrats ausgehend von einer Substratquelle in einer Plasmabeschichtungszelle, um den Schutzfilm zu bilden, bis zu einer Sammelstelle für den Schutzfilm,
b) Aussetzen einer ersten Seite des Substrats einer Plasmaabscheidung in einer Kammer, in der sich eine Gasatmosphäre befindet, die sich aus mindestens einem Plasmagas zusammensetzt, mit einer gesteuerten dielektrischen Barriereentladung (DBD) des Plasmagases, ausgewählt aus Edelgasen oder deren Mischungen, in Gegenwart von mindestens einem Silikonvorläufer, ausgewählt aus Siloxanen, die eine charakteristische zyklische Gruppe umfassen,
c) Bilden der Beschichtung auf Silikonbasis auf Grundlage des Silikonvorläufers in dem Plasma, und
d) Sammeln des mit der mindestens einen Beschichtungsschicht auf Silikonbasis ausgestatteten Schutzfilms.

8. Verfahren zur Herstellung eines Schutzfilms auf Siliciumbasis für klebende oder selbstklebende Elemente nach Anspruch 7, wobei die Gasatmosphäre in der Kammer einen Sauerstoffgehalt von kleiner oder gleich 50 Volumen-ppm, bevorzugt kleiner oder gleich 20 Volumen-ppm und noch bevorzugter kleiner oder gleich 10 Volumen-ppm aufweist.

9. Verfahren nach Anspruch 7 oder Anspruch 8, wobei das Substrat mit einer Substratlaufgeschwindigkeit im Bereich zwischen 10 und 60 m/min, vorzugsweise zwischen 10 und 50 m/min, bevorzugt zwischen 20 und 40 m/min, vorteilhafterweise zwischen 25 und 40 m/min, vorteilhaft zwischen 30 und 40 m/min läuft und/oder die Gasatmosphäre in der Kammer sich auf Atmosphärendruck ±100 Pa befindet und/oder die Plasmaabscheidung eine Abscheidedauer von kleiner oder gleich 4 Sekunden, vorzugsweise kleiner oder gleich 2 Sekunden, und noch bevorzugter kleiner oder gleich 1 Sekunde aufweist und/oder die Entladung hochfrequent ist, vorzugsweise mit einer Leistungsdichte im Bereich zwischen 0,10 W/cm² und 10 W/cm², bevorzugter zwischen 0,15 W/cm², besonders zwischen 0,2 W/cm², ja sogar zwischen 0,25 W/cm² und 0,8 W/cm², und noch bevorzugter zwischen 0,35 W/cm² und 0,7 W/cm², wobei sich die Flächeneinheit auf die kumulierte Fläche der Elektroden bezieht.

10. Verwendung eines Schutzfilms nach einem der Ansprüche 1 bis 4 mit einem klebenden Element, das eine erste Seite, die mit klebender oder selbstklebender Eigenschaft ausgestattet ist, und gegebenenfalls eine zweite, nichtklebende Seite umfasst, wobei der Schutzfilm auf der ersten, mit klebender oder selbstklebender Eigenschaft ausgestatteten Seite und/oder zweiten, nichtklebenden Seite angebracht ist.

11. Verwendung nach Anspruch 10, wobei das klebende Element ein Etikett, ein Klebestreifen, ein doppelseitiges Klebeband, ein Schutzfilm, insbesondere von elektronischer Güte, eine klebende oder selbstklebende medizinische Vorrichtung, wie etwa ein klebender oder selbstklebender, zum Beispiel silikonisierter, medizinischer Verband, ein Pflaster, eine Klebeelektrode, die dafür beschaffen ist, sich mit der Haut in Kontakt zu befinden, insbesondere von medizinischer Güte, ist.

12. Verwendung nach einem der Ansprüche 10 oder 11 in einem Reinraum.

## Claims

1. Protective film based on silicon for adhesive or self-adhesive elements, **characterised in that** said protective film is based on silicon chosen from among siloxanes comprising a cyclic characteristic group and has an extractable silicone content that is lower than or equal to 100ng/cm², preferably lower than or equal to 50, preferentially lower than or equal to 20ng/cm², and even more preferentially, lower than 10ng/cm², preferentially lower than 5ng/cm², being measured by the quantity of silicone released in the form of monomers or oligomers, either nonvolatile (IDEMA Standards M7-98 "Organic Contamination as Nonvolatile Residue (NVR)", ECSS-Q-ST-70-05C "Detection of organic contamination of surfaces by infrared spectroscopy", Seagate 20800032-001 Rev C. & 20800014-001 Rev G, Western Digital 2092-772141 Rev AD & 2092-771888 Rev AC) or volatile (IDEMA Standards M11-99 "General Outgas Test Procedure by Dynamic Headspace Analysis", Seagate 20800020-001 Rev N, Western Digital 2092-001026 Rev AC & 2092-771888 Rev AC).

2. Protective film based on silicon for adhesive or self-adhesive elements according to claim 1, further comprising a paper, woven or non-woven textile or plastic material substrate.

3. Protective film based on silicon for adhesive or self-adhesive elements according to claim 1 or claim 2, having at least one of the following features chosen from among a peeling force lower than or equal to 2N/25mm measured on a TesaTM 7475 adhesive measured according to the standard FTM10, having a residual adhesion greater than or equal to 80%, measured according to the standard FTM11, a surface having a static contact angle of water greater than 90°, preferably greater than 95°, and even more preferentially greater than 100°, such as measured on a Krüss DSA25 device, a surface energy, lower than 30mN/m, preferably lower than 25nN/m and even more preferentially lower than 20nN/m, such as calculated from contact angle measurements of two liquids (water and diiodomethane) according to the Owens and Wendt model.

4. Protective film based on silicon for adhesive or self-adhesive elements according to any one of claims 1 to 3, having a nitrogen content lower than or equal to 1 atomic %, measured according to the XPS/ESCA technique.

5. Assembly comprising at least one protective film based on silicon for adhesive or self-adhesive elements according to any one of claims 1 to 4, and an adhesive or self-adhesive element having a first face provided with adhesive or self-adhesive property.

6. Assembly according to claim 5, wherein said adhesive element is a label, an adhesive strip, a double-sided adhesive, a protective film, in particular of electronic grade, an adhesive or self-adhesive medical device, like an adhesive or self-adhesive medical dressing, for example, siliconised, a patch, an adhesive electrode arranged to be in contact with the skin, in particular of medical grade.

7. Method for producing a protective film based on silicon for adhesive or self-adhesive elements according to any one of claims 1 to 6, provided with at least one coating layer based on silicon arranged to rest on a paper, woven or non-woven textile or plastic material substrate, comprising the following steps:
a) scrolling of said substrate from a substrate source in a plasma coating cell to form said protective film up to a point for collecting said protective film,
b) exposing a first face of said substrate to a plasma deposition in a chamber, wherein there is a gaseous atmosphere, composed of at least one plasma gas with a discharge controlled by dielectric barrier (DBD) of said plasma gas chosen from among rare gases or their mixtures in the presence of at least one silicone precursor chosen from among siloxanes comprising a cyclic characteristic group,
c) forming said coating based on silicon from said silicone precursor in said plasma, and
d) collecting said protective film provided with said at least one coating layer based on silicon.

8. Method for producing a protective film based on silicon for adhesive or self-adhesive elements according to claim 7, wherein said gaseous atmosphere in the chamber has an oxygen content lower than or equal to 50 ppm volume, preferentially lower than or equal to 20 ppm volume, and even more preferentially, lower than or equal to 10 ppm volume.

9. Method according to claim 7 or claim 8, wherein said substrate scrolls at a substrate scrolling speed of between 10 and 60m/min, preferably between 10 and 50m/min, preferably between 20 and 40m/min, advantageously between 25 and 40m/min, advantageously between 30 and 40m/min and/or said gaseous atmosphere in the chamber is at the atmospheric pressure ± 100Pa and/or said plasma deposition has a deposition duration lower than or equal to 4 seconds, preferably lower than or equal to 2 seconds, and even more preferentially, lower than or equal to 1 second and/or said discharge is at radiofrequency, preferably with a power density being between 0.10W/cm² and 10W/cm², more preferentially between 0.15W/cm², more specifically between 0.2W/cm², even between 0.25W/cm² and 0.8W/cm², and even more preferentially between 0.35W/cm² and 0.7W/cm², the surface unit referring to the cumulated surface of the electrodes.

10. Use of a protective film according to any one of claims 1 to 4, with an adhesive element comprising a first face provided with adhesive or self-adhesive property, and optionally a second non-adhesive face, said protective film being affixed onto said first face provided with adhesive or self-adhesive property and/or second non-adhesive face.

11. Use according to claim 10, wherein said adhesive element is a label, an adhesive strip, a double-sided adhesive, a protective film, in particular of electronic grade, an adhesive or self-adhesive medical device, like an adhesive or self-adhesive medical dressing, for example siliconised, a patch, an adhesive electrode arranged to be in contact with the skin, in particular of medical grade.

12. Use according to any one of claims 10 or 11, in a clean room.
